# FASCICULE DE BREVET EUROPEEN

(11) **EP 2 030 892 B1**
(45) Date de publication et mention de la délivrance du brevet: **03.03.2010**
(21) Numéro de dépôt: 08161797.9
(22) Date de dépôt: 05.08.2008
(51) Int. Cl.: B64D 27/26, F02C 7/04

(54) **Pylone de suspension d'un moteur sous une aile d'avion**
Mast zur Aufhängung eines Motors unter einem Flugzeugflügel
Suspension pylon for an engine beneath an aircraft wing

(30) Priorité: 30.08.2007 FR 0706076
(43) Date de publication de la demande: 04.03.2009
(73) Titulaire: Snecma, 75015 Paris (FR)
(72) Inventeur: Balk, Wouter, 77000, MELUN (FR)
(74) Mandataire: Ramey, Daniel

(56) Documents cités:
- FR-A- 1 006 380
- GB-A- 2 064 005
- US-A- 2 815 184

## Description

La présente invention concerne un pylône de suspension d'un moteur sous une aile d'avion, ainsi qu'un moteur fixé sous une aile d'un pylône de ce type.

Dans les turboréacteurs à double flux, l'air en entrée de la turbomachine se divise en un flux primaire ou flux chaud traversant un compresseur qui alimente une chambre de combustion agencée en aval et en un flux secondaire ou flux froid, fournissant une partie importante de la poussée, qui s'écoule autour du compresseur et qui est éjecté avec les gaz chauds.

Afin de limiter la consommation de carburant et le niveau sonore, les fabricants de moteurs cherchent à augmenter le taux de dilution qui est égal au rapport entre le débit d'air froid et le débit d'air chaud, ce qui conduit à une augmentation du diamètre de la turbomachine. Or, du fait de l'installation de ces moteurs sous les ailes, l'augmentation du taux de dilution est limitée par la nécessité d'avoir une distance minimale entre la nacelle, c'est-à-dire l'enveloppe extérieure de la turbomachine, et le sol.

Pour des raisons de sécurité, le moteur est généralement positionné en amont de l'aile pour éviter en cas d'éclatement d'un disque de rotor, par exemple, que les débris atteignent les parties de l'aile où le carburant est stocké. Pour la même raison, les moteurs ne sont pas intégrés à l'aile.

Une première approche consisterait à augmenter la hauteur du train d'atterrissage afin d'augmenter la distance entre la turbomachine et le sol. Cependant, cette solution n'est pas satisfaisante car elle conduit à un accroissement sensible du coût et de la masse de l'avion. Une deuxième approche consiste à rapprocher la turbomachine de l'aile et donc à réduire la distance entre la nacelle et l'aile. L'air circulant dans cet espace est ainsi accéléré, ce qui peut engendrer la formation d'ondes de choc induisant une augmentation importante de la traînée aérodynamique.

On préfère toutefois, dans la technique actuelle conserver une garde au sol suffisante et rapprocher le moteur de l'aile, en dépit des inconvénients que cela comporte.

Le document FR1006380, décrit un dispositif permettant d'escamoter un moteur d'appoint de puissance à l'intérieur du fuselage ou bien de l'aile. Le mécanisme d'escamotage comprend à deux leviers articulés sur le moteur et sur une partie fixe située à l'intérieur de la cavité d'escamotage du moteur, et deux vérins montés entre l'avion et les leviers pour faire entrer et sortir le moteur de la cavité d'escamotage par pivotement des leviers.

Le document GB 2064005, décrit un turboréacteur suspendu de façon fixe sous une aile d'avion par un pylône. L'entrée d'air du moteur est de forme sensiblement elliptique, le grand axe de l'ellipse étant sensiblement horizontal, pour augmenter la garde au sol.

La présente invention a pour objet un pylône de suspension d'un moteur d'avion, qui évite les inconvénients de la technique antérieure de façon simple, efficace et économique.

Elle propose, à cet effet, un pylône de suspension d'un moteur sous une aile d'avion, propre à être fixé par une extrémité sur un carter du moteur et par une autre extrémité à l'aile, caractérisé en ce qu'il comprend au moins une articulation reliant deux parties du pylône dont l'une est propre à être fixée sur un carter du moteur et l'autre à l'aile de l'avion et un moyen motorisé reliant la partie du pylône fixée au carter à la partie du pylône fixée à l'aile et permettant de modifier en vol la position en hauteur du moteur entre une position « croisière » et une position décollage/atterrissage.

L'intégration selon l'invention d'une articulation au pylône autorise un mouvement relatif du moteur par rapport à l'aile et par rapport au sol. L'invention permet ainsi d'adapter la position du moteur par rapport à l'aile en fonction des différentes phases de vol. Lorsque l'avion est au sol ou en phase de décollage ou bien d'atterrissage, le moteur est rapproché de l'aile de manière à ce que la distance entre la nacelle et le sol soit suffisante. En phase de croisière, le moteur peut être éloigné de l'aile, ce qui permet de limiter la traînée aérodynamique et ainsi d'optimiser la consommation de carburant.

De plus, un tel pylône articulé permet de faciliter les opérations de maintenance en permettant un abaissement du moteur.

Le moyen motorisé de modification de la position en hauteur du moteur, peut être par exemple un vérin électrique ou hydraulique.

Ce vérin permet de contrôler le déplacement du moteur par rapport à l'aile. Dans le cas d'un vérin hydraulique, celui-ci peut être relié au circuit hydraulique du train d'atterrissage par exemple, permettant ainsi son alimentation en puissance.

De plus, en cas de perte d'aube, le vérin hydraulique peut absorber une partie de l'énergie libérée par la désolidarisation d'une aube avec son point d'attache.

Avantageusement, l'articulation comprend au moins un quadrilatère déformable comportant deux biellettes dont les extrémités sont articulées autour d'axes horizontaux transversaux sur deux parties du pylône, dont l'une est fixée sur le carter du moteur et l'autre à l'aile.

Selon une caractéristique de l'invention, les deux biellettes sont parallèles et ont des longueurs identiques.

Les deux biellettes peuvent également avoir des longueurs différentes ce qui permet par actionnement du vérin d'incliner le moteur par rapport à l'horizontale en phase de décollage afin d'optimiser l'entrée d'air dans la turbomachine.

L'invention concerne également un moteur d'avion fixé sous une aile par un pylône de suspension, caractérisé en ce que le pylône est du type décrit ci-dessus.

Typiquement, la variation de la position en hauteur du moteur sous l'aile est d'environ 20 cm.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en coupe axiale d'un pylône de suspension selon l'invention, le moteur étant en position haute;
- la figure 2 est une vue schématique en coupe axiale de ce pylône, le moteur étant en position basse.

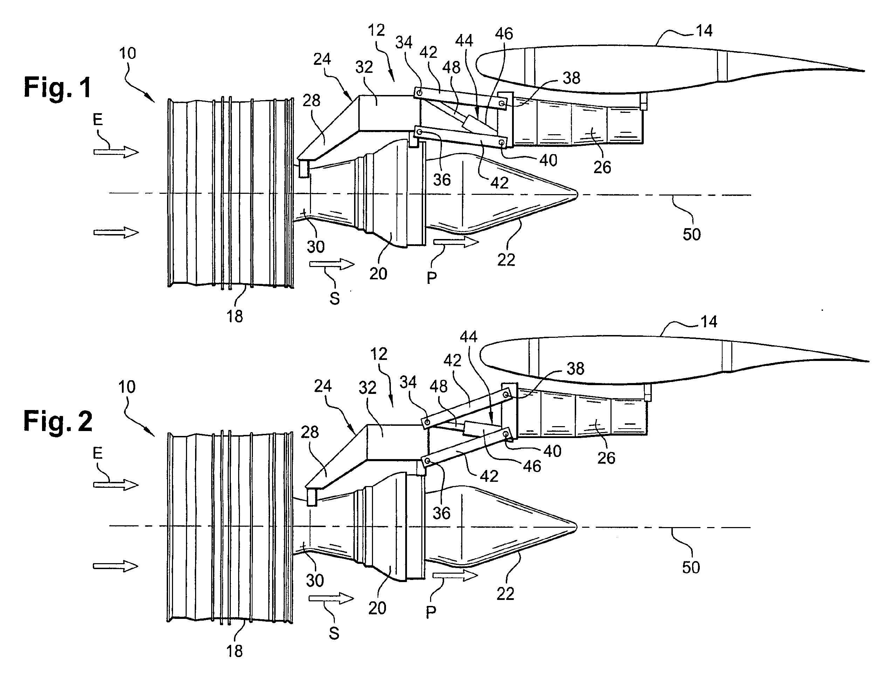

On se réfère tout d'abord à la figure 1 qui représente schématiquement un turboréacteur 10 accroché par un pylône 12 en amont et sous l'aile 14 d'un avion.

Le turboréacteur comprend une nacelle (non représentée) fixée sur un carter 18 de forme cylindrique qui entoure la partie avant du moteur dont seule la partie aval est visible et une roue de soufflante (non visible) montée à l'intérieur du carter 18. Cette roue de soufflante est entraînée en rotation par la turbine du turboréacteur, d'une façon bien connue de l'homme du métier.

Lors du fonctionnement du moteur, l'air entrant en amont, représenté par les flèches E est divisé en un flux primaire et un flux secondaire, respectivement. Le flux primaire alimente un compresseur d'entrée, puis est mélangé avec du carburant et brûlé dans la chambre de combustion. Les gaz de combustion traversent une turbine pour ensuite être éjectés dans un carter, d'échappement 20 autour d'un cône d'éjection 22 comme indiqué par la flèche P. Le flux secondaire (flèche S), s'écoule autour du corps du moteur et représente l'essentiel de la poussée dans un moteur à fort taux de dilution.

Le pylône de suspension 12 est formé dans cet exemple de deux parties amont 24 et aval 26, la partie aval 26 étant fixée sous l'aile 14 de l'avion et la partie amont 24 étant fixée au turboréacteur 10. La partie amont comprend un bras amont 28 s'étendant en oblique vers le bas et fixé à son extrémité amont sur un carter de compresseur haute-pression 30. Le bras 28 est raccordé à son extrémité aval à une partie 32 dont l'extrémité aval est fixée sur le carter d'échappement 20. Les parties amont 24 et aval 26 du pylône sont reliées à leurs extrémités aval et amont par des biellettes 42 dont les extrémités sont articulées sur les parties amont 24 et aval 26 autour d'axes horizontaux transversaux 34, 36 et 38, 40, respectivement, de manière à former un quadrilatère articulé. Dans le mode de réalisation représenté aux dessins, les biellettes 42 ont une même longueur et forment ainsi un parallélogramme déformable.

Un vérin 44 hydraulique ou électrique comprenant un cylindre 46 et une tige de piston 48 est monté entre les axes d'articulation opposés 34, 40 du parallélogramme, une extrémité du cylindre étant articulée sur l'axe d'articulation 40 de la partie aval 26 du pylône 12 tandis qu'une extrémité de la tige de piston 48 est articulée sur l'axe d'articulation 34 de la partie amont 24 du pylône 12, ce montage permettant de modifier la position du moteur par rapport à l'aile, au sol et en vol.

Lors du fonctionnement de la turbomachine 10, on distingue plusieurs phases de vol durant lesquelles la distance entre la turbomachine 10 et l'aile 14 doit être modifiée. A l'arrêt et lors du décollage, le vérin permet de maintenir la turbomachine 10 en position haute afin de conserver une distance turbomachine / sol maximale, la turbomachine 10 étant alors proche de l'aile 14. Durant une phase de croisière, le vérin 44 permet d'éloigner la turbomachine 10 de l'aile 14 pour limiter les effets de traînée aérodynamique et donc réduire la consommation de carburant. Enfin, à l'atterrissage, la turbomachine 10 est ramenée dans la position haute correspondant au décollage afin de retrouver une garde au sol suffisante. Le vérin permet par exemple de déplacer la turbomachine 10 sur une hauteur d'environ 20 cm.

Il est à noter que l'augmentation de la traînée aérodynamique et donc l'augmentation de la consommation de carburant due à la proximité de la turbomachine 10 par rapport à l'aile 14 durant les phases de décollage et d'atterrissage est largement compensé par la baisse de la consommation réalisée durant la phase de croisière grâce à l'éloignement de la turbomachine 10 pour limiter la traînée et à l'utilisation d'une turbomachine 10 à fort taux de dilution. De plus, les phases de décollage et d'atterrissage sont des phases qui durent peu de temps comparativement avec la phase de croisière.

En variante, les extrémités du vérin peuvent être fixées sur les deux autres axes d'articulation opposés 36, 38 du parallélogramme, le vérin travaillant dans un sens inverse par rapport à la configuration représentée aux dessins.

Dans une autre variante, on peut prévoir un quadrilatère articulé de chaque côté du vérin 44 afin d'assurer une meilleure tenue de la turbomachine 10 et répartir au mieux la poussée de la turbomachine 10 sur l'ensemble du pylône 12.

Dans encore une autre variante, les biellettes 42 ont des longueurs différentes, ce qui permet de modifier l'inclinaison de l'axe 50 de la turbomachine par rapport à l'aile tout en éloignant ou rapprochant la turbomachine de l'aile, afin notamment d'améliorer les performances de la turbomachine 10 au décollage.

Dans d'autres variantes de l'invention, l'articulation du pylône peut être prévue entre le pylône et le moteur, ou entre le pylône et l'aile.

## Revendications

1. Pylône de suspension (12) d'un moteur (10) sous une aile d'avion (14), propre à être fixé par une extrémité sur un carter du moteur et par une autre extrémité à l'aile (14), **caractérisé en ce qu'**il comprend au moins une articulation reliant deux parties du pylône dont l'une est propre à être fixée sur un carter du moteur et l'autre à l'aile de l'avion et un moyen motorisé reliant la partie du pylône fixée au carter à la partie du pylône fixée à l'aile et permettant de modifier en vol la position en hauteur du moteur (10) entre une position « croisière » et une position décollage/atterrissage.

2. Pylône selon la revendication 1, **caractérisé en ce que** l'articulation comprend au moins un quadrilatère déformable comportant deux biellettes (42) dont les extrémités sont articulées autour d'axes horizontaux transversaux (34, 36, 38, 40) sur l'une et sur l'autre partie du pylône (12), respectivement.

3. Pylône selon la revendication 2, **caractérisé en ce que** le moyen motorisé comprend un vérin (44) hydraulique ou électrique comportant un cylindre (46) articulé sur une partie (24) du pylône (12) et une tige de piston (48) articulée sur l'autre partie (26) du pylône (12).

4. Pylône selon la revendication 2 ou 3, **caractérisé en ce que** les deux biellettes (42) sont parallèles et ont des longueurs identiques.

5. Pylône selon la revendication 2 ou 3, **caractérisé en ce que** les deux biellettes (42) ont des longueurs différentes.

6. Moteur (10) d'avion fixé sous une aile par un pylône de suspension, **caractérisé en ce que** le pylône (12) est du type décrit dans l'une des revendications précédentes.

7. Moteur (10) selon la revendication 6, **caractérisé en ce que** la variation de la position en hauteur du moteur (10) sous l'aile est d'environ 20 cm.

## Claims

1. A pylon (12) for suspending an engine (10) beneath an aircraft wing (14), capable of being attached by one end to a casing of the engine and by another end to the wing (14), which comprises at least one articulation connecting two portions of the pylon (24, 26), one being suitable for being attached to casing of the engine (10) and the other to the wing (14) of the aircraft and a motorized means connecting that portion of the pylon (12) connected to the casing to the portion of the pylon attached to the wing (14) and making it possible to change in flight the height position of the engine (10) between a "cruise" position and a take off/landing position.

2. The pylon as claimed in claim 1, wherein the articulation comprises at least one deformable quadrilateral comprising two link rods (42) whose ends are articulated about horizontal transverse axes (34, 36, 38, 40) on one and on the other portion of the pylon (12) respectively.

3. The pylon as claimed in claim 2, wherein the motorized means comprises a hydraulic or electric actuator (44) comprising a cylinder (46) articulated on one portion (24) of the pylon (12) and a piston rod (48) articulated on the other portion (26) of the pylon (12).

4. The pylon as claimed in claim 2 or 3, wherein the two link rods (42) are parallel and have identical lengths.

5. The pylon as claimed in claim 2 or 3, wherein the two link rods (42) have different lengths.

6. An aircraft engine attached under a wing by a suspension pylon, wherein the pylon (12) is of the type described in one of the preceding claims.

7. The engine as claimed in claim 6, wherein the variation of the height position of the engine (10) beneath the wing (14) is approximately 20 cm.

## Patentansprüche

1. Aufhängungsmast (12) zur Aufhängung eines Triebwerks (10) unter einer FlugzeugTragfläche (14), der geeignet ist, mit einem Ende an einem Gehäuse des Triebwerks und mit dem anderen Ende an der Tragfläche (14) befestigt zu werden,
**dadurch gekennzeichnet,**
**dass** er mindestens ein Gelenk umfasst, das zwei Teile des Masts miteinander verbindet, von denen der eine an einem Gehäuse des Triebwerks und der andere an der Tragfläche des Flugzeugs befestigt werden können, sowie ein motorgetriebenes Mittel umfasst, das den am Gehäuse befestigten Teil des Masts mit dem an der Tragfläche befestigten Teil des Masts verbindet und es ermöglicht, während des Fluges die Höhenposition des Triebwerks (10) zwischen einer "Reise"-Position und einer Start- und Landeposition zu verändern.

2. Aufhängungsmast nach Anspruch 1,
**dadurch gekennzeichnet,**
**dass** das Gelenk mindestens ein verformbares Viereck mit zwei Pleuelstangen (42) bildet, deren Enden um horizontale Querachsen (34, 36, 38, 40) herum an dem einen bzw. dem anderen Teil des Masts (12) angelenkt sind.

3. Aufhängungsmast nach Anspruch 2,
**dadurch gekennzeichnet,**
**dass** das motorgetriebene Mittel aus einer hydraulischen oder elektrischen Zylindervorrichtung (44) besteht, die einen an einem Teil (24) des Masts (12) angelenkten Zylinder (46) und eine an dem anderen Teil (26) des Masts (12) angelenkte Kolbenstange (48) umfasst.

4. Aufhängungsmast nach Anspruch 2 oder 3,
**dadurch gekennzeichnet,**
**dass** die beiden Pleuelstangen (42) parallel angeordnet sind und identische Längen haben.

5. Aufhängungsmast nach Anspruch 2 oder 3,
**dadurch gekennzeichnet,**
**dass** die beiden Pleuelstangen (42) unterschiedliche Längen haben.

6. Flugzeug-Triebwerk (10), das mittels eines Aufhängungsmasts unter einer Tragfläche befestigt ist,
**dadurch gekennzeichnet,**
**dass** der Mast (12) des Typs ist wie in einer der vorherigen Ansprüche beschrieben.

7. Triebwerk (10) nach Anspruch 6,
**dadurch gekennzeichnet,**
**dass** die Veränderung der Höhenposition des Triebwerks (10) unter der Tragfläche ca. 20 cm beträgt.
